# EUROPEAN PATENT SPECIFICATION

(11) **EP 2 657 320 B1**
(45) Date of publication and mention of the grant of the patent: **17.06.2020**
(21) Application number: 11850998.3
(22) Date of filing: 15.12.2011
(51) Int. Cl.: C10B 57/04

(54) **METHOD FOR MANUFACTURING PARTIALLY CARBONIZED COAL BRIQUETTES**
VERFAHREN ZUR HERSTELLUNG TEILWEISE KARBONISIERTER KOHLEBRIKETTS
PROCÉDÉ POUR FABRIQUER DES BRIQUETTES DE CHARBON PARTIELLEMENT CARBONISÉES

(30) Priority: 21.12.2010 KR 20100131803
(43) Date of publication of application: 30.10.2013
(73) Proprietor: POSCO, Nam-ku, Pohang-shi Kyungsangbuk-do 790-300 (KR)
(72) Inventor: LEE, Sung-Su, Pohang-shi Kyungsangbuk-do 790-300 (KR); HEO, Nam-Hwan, Pohang-shi Kyungsangbuk-do 790-300 (KR); LEE, Hoo-Geun, Pohang-shi Kyungsangbuk-do 790-300 (KR)
(74) Representative: Zech, Stefan Markus
(86) International application number: PCT/KR2011/009653
(87) International publication number: WO 2012/086961

(56) References cited:
- WO-A1-2008/018774
- CN-A- 101 280 203
- CN-A- 101 870 898
- DE-A1- 19 938 026
- JP-A- H0 565 487
- JP-A- H07 278 561
- JP-A- S60 177 094
- JP-A- 2003 213 273
- JP-A- 2005 213 461
- JP-A- 2005 213 461
- JP-A- 2006 328 236

## Description

### FIELD OF THE INVENTION

The present invention relates to a method for manufacturing a partially carbonized coal briquette having excellent hot strength, and an apparatus for manufacturing molten iron.

### DESCRIPTION OF THE RELATED ART

A blast furnace process for producing molten iron has been continuously developed as the most competitive steel assortment process in views of productivity and energy efficiency. However, sintered ore, pellets, and coke that are subjected to a process of previously agglomerating fine ore and fine coal are required in order to perform a blast furnace operation. In this case, there is a limitation in that only raw materials iron ore and coal having quality of a predetermined level or more are used in order to satisfy the quality required in the blast furnace process.

A technology for overcoming this limitation has been actively developed and related devices have been actively improved, however there is a predetermined limit. That is, high quality iron ore and coal having are scarce throughout the world, and thus costs thereof are largely increasing.

Meanwhile, various alternative processes for solving environmental problems occurring in a sintering process and a coke manufacturing process have been researched and developed, and some processes are at the stage of practical application. Among the processes, the first process reaching a commercially available stage is a COREX process, and a FINEX® process of significantly removing problems of the COREX process to directly use low-priced fuel and raw materials has been developed and succeeded in terms of commercialization.

The COREX process is a process where pellet or lump ore instead of known sintered ore and coke is charged into a reduction furnace to be partially reduced, and is then subjected to melting reduction in a melting furnace to produce molten iron. In this case, lump coal is charged in order to supply a heat source and a reducing agent. However, effective treatment of a large amount of fine iron ore and fine coal generated after lump ore and lump coal used in the COREX process are selected and used still remains as a big problem. In order to solve the problem, the fine iron ore and the fine coal generated in the COREX process are used as raw materials of the sintering process and the coke process by constituting the COREX process together with a blast furnace process in the art. Meanwhile, a FINEX process overcoming the problems of the device constitution to directly use all kinds of iron ore and coal has been developed and is commercially available.

The FINEX process includes a process of reducing fine iron ore, a process of agglomerating the reduced fine iron ore, a process of using a reduction furnace for pre-heating and partially reducing the agglomerated reduced fine iron ore and lump iron ore, a process of forming fine coal, and a process of using a melting furnace for charging the raw materials and fuel to generate a gas and produce molten irons through reduction and melting.

HCI (hot compacted iron) is supplied as an iron source from an upper portion of a melting furnace in a FINEX melting furnace operation, a coal briquette is charged as a fuel or a reducing material for reducing and melting the HCI from the upper portion, and oxygen together with fine coal is injected thereinto at a lower portion. In the coal briquette, air permeability and liquid permeability can be maintained only when a predetermined particle size is maintained in a char bed in the melting furnace. Unlike coke, since the coal briquette is weak to thermal impact or mechanical abrasion, there is a great demand for the coal briquette having hot strength at a predetermined level or more.

Examples for manufacturing molten iron with carbonized coal briquettes can be found in JP 2005 213461 A and CN 101 870 898 A.

### SUMMARY OF THE INVENTION

The present invention has been made in an effort to provide a method for manufacturing a partially carbonized coal briquette having excellent hot strength, and an apparatus for manufacturing molten iron.

In order to attain the above object, the subject-matter according to claim 1 is proposed. Not claimed is an apparatus for manufacturing a partially carbonized coal briquette, including a coal briquette supplying device, a carbonization furnace receiving a coal briquette from the coal briquette supplying apparatus, and a hot wind generating furnace supplying a high temperature gas to the carbonization furnace.

The coal briquette may be supplied from an upper portion of the carbonization furnace to a lower portion thereof.

The hot wind generating furnace may be connected through a high temperature gas supplying pipe to a middle portion of the carbonization furnace, and the high temperature gas may be supplied through the high temperature gas supplying pipe to the carbonization furnace.

The high temperature gas may be at 700°C or more.

A heat exchanger may be provided at the lower portion of the carbonization furnace, and a rotary valve may be provided at a lower portion of the heat exchanger.

The apparatus for manufacturing a partially carbonized coal briquette may further include a coal briquette cooler cooling the coal briquette exhausted from the carbonization furnace.

The hot wind generating furnace may include a burner, a fuel supplying line, a combustion air supplying line, a FINEX exhaust gas supplying line, and a nitrogen supplying line may be connected to the hot wind generating furnace, and an exhaust gas exhausted from a reduction furnace during a FINEX process may be supplied through the FINEX exhaust gas supplying line to the hot wind generating furnace.

The apparatus for manufacturing a partially carbonized coal briquette may further include a carbonization furnace exhaust gas cooling device cooling a carbonization furnace exhaust gas exhausted from the carbonization furnace, in which the carbonization furnace exhaust gas cooling device may be connected through a carbonization furnace exhaust gas supplying line to the hot wind generating furnace, and the cooled exhaust gas may be supplied through the carbonization furnace exhaust gas supplying line to the hot wind generating furnace.

A blower may be provided at the carbonization furnace exhaust gas supplying line.

A line branched from the nitrogen supplying line may be connected to the lower portion of the carbonization furnace.

A generated gas combustion device may be provided at the upper portion of the carbonization furnace. Further, a leveler may be provided at the upper portion of the carbonization furnace to measure a charging height of the coal briquette.

A rotary valve may be provided at a lower portion of the coal briquette supplying apparatus.

The present invention provides a method of manufacturing a partially carbonized coal briquette, including supplying a coal briquette, and partially carbonizing the coal briquette by adding a high temperature gas to the coal briquette.

In the partially carbonizing of the coal briquette, a carbonization initiation temperature is 600°C to 650°C, and a carbonization termination temperature is 700°C or more.

The method of manufacturing a partially carbonized coal briquette further includes, before the supplying of the coal briquette, manufacturing the coal briquette by agglomerating coal.

In the manufacturing of the coal briquette, fluidity of the coal is maintained as according to claim 1. Further, in the manufacturing of the coal briquette, total dilatation of the coal is maintained at 60 % or less.

In the manufacturing of the coal briquette, a coking property controlling agent may be added to the coal.

Yet another non-claimed apparatus for manufacturing molten iron, including: a reduction furnace converting an iron ore-containing mixture into a reduced material by reduction; an apparatus for manufacturing a partially carbonized coal briquette receiving exhaust gas from the reduction furnace to partially carbonize the coal briquette; and a melter-gasifier receiving the reduced material from the reduction furnace and receiving the partially carbonized coal briquette from the apparatus for manufacturing a partially carbonized coal briquette to manufacture molten iron.

The apparatus for manufacturing a partially carbonized coal briquette may include a coal briquette supplying device, a carbonization furnace receiving the coal briquette from the coal briquette supplying apparatus, and a hot wind generating furnace supplying a high temperature gas to the carbonization furnace.

The hot wind generating furnace may include a burner, a fuel supplying line, a combustion air supplying line, a FINEX exhaust gas supplying line, and a nitrogen supplying line may be connected to the hot wind generating furnace, and the exhaust gas exhausted from a reduction furnace may be supplied through the FINEX exhaust gas supplying line to the hot wind generating furnace.

### BRIEF DESCRIPTION OF THE DRAWINGS

FIG. 1 is a schematic diagram illustrating an apparatus for manufacturing a partially carbonized coal briquette according to an exemplary embodiment of the present invention.
FIG. 2 is a graph illustrating a change in hot strength of the coal briquette according to a carbonization initiation temperature.
FIG. 3 is a graph illustrating a change in hot strength of the coal briquette according to a carbonization termination temperature.
FIG. 4 is a graph illustrating a temperature distribution of a high temperature gas according to a coal briquette charging time.
FIG. 5 is a schematic diagram illustrating an apparatus for manufacturing molten iron according to the exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the scope of the present invention as defined in the claims. Accordingly, the drawings and description are to be regarded as illustrative in nature and not restrictive. Like reference numerals designate like elements throughout the specification.

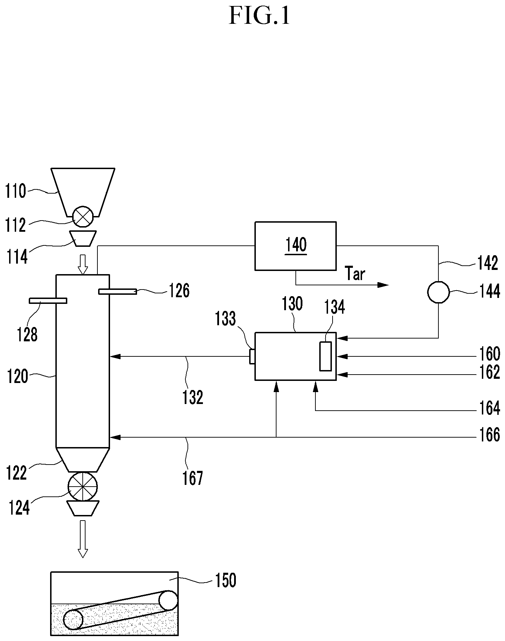

FIG. 1 is a schematic diagram illustrating an apparatus for manufacturing a partially carbonized coal briquette according to an exemplary embodiment of the present invention.

Referring to FIG. 1, the apparatus for manufacturing a partially carbonized coal briquette according to the exemplary embodiment of the present invention includes a coal briquette supplying device 110, a carbonization furnace 120, a hot wind generating furnace 130, a carbonization furnace exhaust gas cooling device 140, and a coal briquette cooler 150.

The coal briquette supplying apparatus 110 is an apparatus for supplying the coal briquette to the carbonization furnace 120. The coal briquette is manufactured by using coal as a raw material, and the coal briquette manufactured in the apparatus for manufacturing the coal briquette (not illustrated) may be supplied to the coal briquette supplying apparatus 110.

It is preferable for fluidity of the coal briquette to be 1 log ddpm or less and for total dilatation to be 25% or less. If the fluidity is more than 1 log ddpm or the total dilatation is more than 25%, there is a high possibility of coal briquettes being bonded or attached to each other in the carbonization furnace 120, and furthermore, it may be difficult to exhaust the partially carbonized coal briquette from the carbonization furnace.

The coal briquette supplying apparatus 110 may be, for example, a charging hopper, and may have various other shapes. A rotary valve 112 is provided at a lower portion of the coal briquette supplying apparatus 110. Further, the coal briquette is supplied through a coal briquette exhaust pipe 114 provided under the rotary valve 112 to the carbonization furnace 120.

The carbonization furnace 120 is an apparatus in which the coal briquette is charged and partially carbonized. A content of a volatile matter of the partially carbonized coal briquette may be about 10%. The partially carbonized coal briquette is charged into a melter-gasifier during a FINEX process, and the volatile matter remaining in the coal briquette is combusted to help to maintain a temperature of an upper portion (dome portion) of the melter-gasifier.

The upper portion of the carbonization furnace 120 may be opened to receive the coal briquette from the coal briquette exhaust pipe 114. A heat exchanger 122 is provided at a lower portion of the carbonization furnace 120. The heat exchanger 122 receives cooling water and exchanges heat with the partially carbonized coal briquette to cool the partially carbonized coal briquette. A rotary valve 124 is provided at a lower portion of the heat exchanger 122.

A generated gas combustion device 126 and a leveler 128 are provided on one side of the upper portion of the carbonization furnace 120. In the case where the amount of gas generated in the carbonization furnace 120 is small or it is difficult to recover the gas, the generated gas combustion device 126 combusts and exhausts the generated gas. The leveler 128 is an apparatus for measuring a height of the coal briquette charged in the carbonization furnace 120.

The hot wind generating furnace 130 supplies the high temperature gas to the carbonization furnace 120. When being supplied to the carbonization furnace 120, the high temperature gas has a temperature of 700°C or more. The high temperature gas is supplied to a middle portion of the carbonization furnace 120 and exhausted to the upper portion. When being exhausted from the carbonization furnace, the high temperature gas may have a temperature of 600°C to 650°C.

When the coal briquette is supplied to the carbonization furnace 120, the coal briquette first comes into contact with the high temperature gas at 600°C to 650°C. The coal briquette comes into contact with the high temperature gas at a higher temperature while descending. Finally, the coal briquette comes into contact with the high temperature gas at 700°C or more.

The temperature of the high temperature gas that the coal briquette first comes into contact with, that is, a carbonization initiation temperature, is preferably 600°C to 650°C. In this temperature range, since a surface of the coal briquette is rapidly heated, a hard cover is formed within a short period of time. Further, in the case where the coal in the coal briquette is dilated during dry distillation, since pressure of the hard cover is applied, hot strength of the coal briquette may be increased.

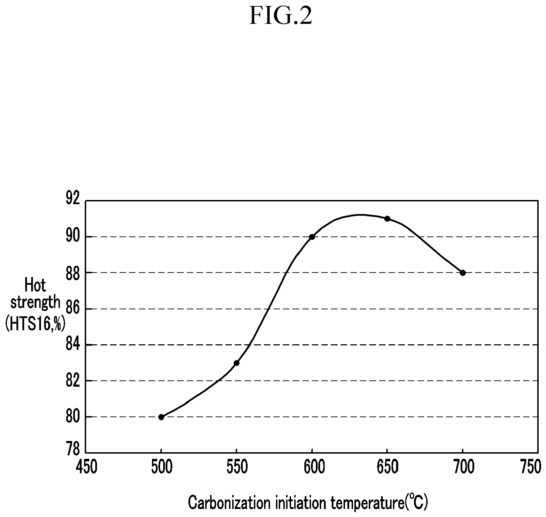

If the carbonization initiation temperature is more than 650°C, since a difference in temperature between internal and external portions of the coal briquette is increased, heat stress is applied, and thus there is a problem in that the occurrence of cracks is increased. If the carbonization initiation temperature is less than 600°C, since the surface of the coal briquette is slowly heated, the hard cover is formed slowly. In this case, since strength of the initial coal briquette is weakened, there is a problem in that the coal briquette is easily broken. FIG. 2 illustrates that the hot strength of the coal briquette has a maximum value in the range of the carbonization initiation temperature of 600°C to 650°C.

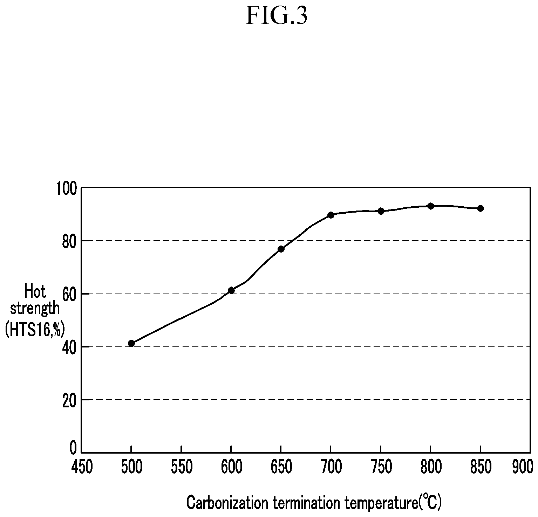

The temperature of the high temperature gas that the coal briquette finally comes into contact with, that is, a carbonization termination temperature, is preferably 700°C or more. If the coal is heated, the coal is primarily shrunk at around 500°C and secondarily shrunk around 700°C, so density of the coal is increased, and the temperament of the coal that is subjected to dry distillation is reinforced only when the coal is heated to the secondary shrinkage temperature. As a result, the hot strength of the coal briquette is increased. FIG. 3 illustrates that the hot strength of the coal briquette is increased until the carbonization termination temperature becomes a value of around 700°C, and thereafter converges to a predetermined value.

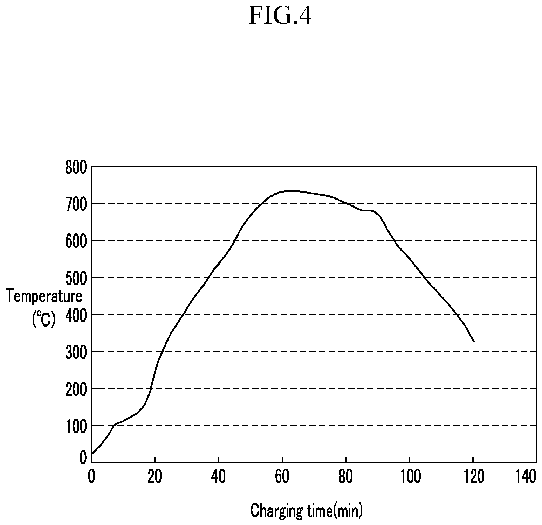

As described above, in the exemplary embodiment of the present invention, it is important to maintain the carbonization initiation temperature and the carbonization termination temperature in a predetermined range. To this end, the height of the coal briquette charged in the carbonization furnace 120 and the temperature of the high temperature gas supplied to the carbonization furnace 120 are adjusted. For example, the carbonization initiation temperature and the carbonization termination temperature may be determined according to the height of the charged coal briquette. In this case, the temperature may be measured by using a thermocouple installed in a height direction of the carbonization furnace 120. FIG. 4 illustrates a temperature distribution of a high temperature gas according to a coal briquette charging time.

As seen in Fig. 1, the hot wind generating furnace 130 is connected through a high temperature gas supplying pipe 132 to the carbonization furnace 120. A high temperature gas is supplied through the high temperature gas supplying pipe 132 to the carbonization furnace 120. An oxygen analyzer 133 may be provided in the high temperature gas supplying pipe 132, and the oxygen analyzer 133 serves to measure an oxygen concentration to control combustion.

A burner 134 is provided in the hot wind generating furnace 130, and a fuel supplying line 160, a combustion air supplying line 162, a FINEX exhaust gas supplying line 164, and a nitrogen supplying line 166 are connected thereto.

Fuel is supplied through the fuel supplying line 160, various gas fuels including natural gas may be used as the fuel, and the exhaust gas generated during the FINEX process may be preferably used. Air is supplied through the combustion air supplying line 162.

The FINEX exhaust gas supplying line 164 is connected to the reduction furnace used during the FINEX process. The gas exhausted from the reduction furnace is supplied through the FINEX exhaust gas supplying line 164 to the hot wind generating furnace 130. The heat of the supplied FINEX exhaust gas is used to partially carbonize the coal briquette in the carbonization furnace 120.

Nitrogen is supplied through the nitrogen supplying line 166, and the nitrogen may prevent oxidation of the coal briquette during a partial carbonization process or a cooling process to ensure quality of the partially carbonized coal briquette. Meanwhile, a branched line 167 branched from the nitrogen supplying line 166 may be connected to the lower portion of the carbonization furnace 120.

The carbonization furnace exhaust gas cooling device 140 cools the carbonization furnace exhaust gas exhausted from the carbonization furnace 120, transports the carbonization furnace exhausted gas to the hot wind generating furnace 130, and uses the carbonization furnace exhaust gas as the fuel. The carbonization furnace exhaust gas cooling device 140 is connected to the carbonization furnace 120 by a carbonization furnace exhaust gas exhausting line 129, and is connected through a carbonization furnace exhaust gas supplying line 142 to the hot wind generating furnace 130.

The carbonization furnace exhaust gas cooling device 140 rapidly cools the carbonization furnace exhaust gas by a water spray manner. In this case, tar contained in the carbonization furnace exhaust gas is separated. The carbonization furnace exhaust gas from which the tar is separated is transported through the carbonization furnace exhaust gas supplying line 142 to the hot wind generating furnace 130. Meanwhile, a blower 144 may be provided in the carbonization furnace exhaust gas supplying line 142, and the blower 144 increases a supplying speed of the carbonization furnace exhaust gas.

The coal briquette cooler 150 is an apparatus for reducing the temperature of the partially carbonized coal briquette exhausted from the carbonization furnace 120. The cooled partially carbonized coal briquette may be supplied to the melter-gasifier of the FINEX process.

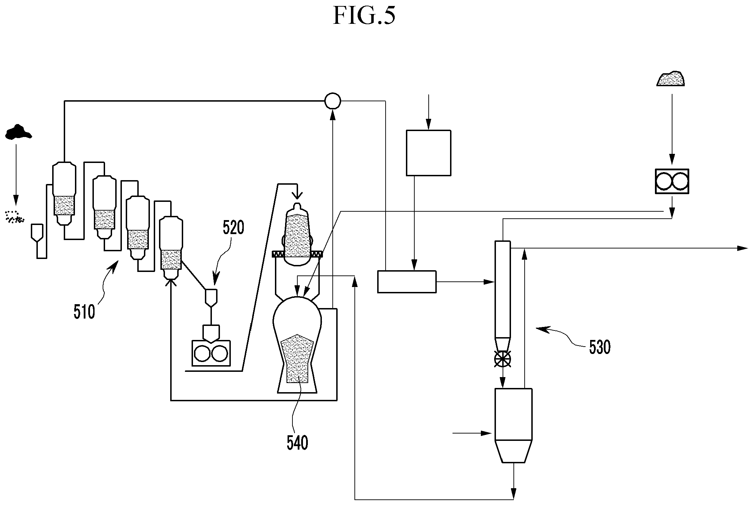

FIG. 5 is a schematic diagram illustrating an apparatus for manufacturing molten iron according to the exemplary embodiment of the present invention.

Referring to FIG. 5, the apparatus for manufacturing the molten iron according to the exemplary embodiment of the present invention includes a reduction furnace 510, an agglomerate manufacturing apparatus 520, an apparatus 530 for manufacturing a partially carbonized coal briquette, and a melter-gasifier 540.

The reduction furnace 510 converts a mixture containing iron ore into a reduced material by reduction. The reduction furnace 510 may have a multistage structure, and may be a fluidized layer reduction furnace. The exhaust gas exhausted in the reduction furnace 510 is supplied to the apparatus 530 for manufacturing a partially carbonized coal briquette.

The agglomerate manufacturing apparatus 520 agglomerates the reduced material supplied from the reduction furnace 510 to manufacture an agglomerate. The manufactured agglomerate is supplied to the melter-gasifier 540.

The apparatus 540 for manufacturing a partially carbonized coal briquette is an apparatus that partially carbonizes the coal briquette. A description of the apparatus 540 for manufacturing a partially carbonized coal briquette overlaps the aforementioned content, and thus will be omitted.

The melter-gasifier 540 receives the agglomerate from the agglomerate manufacturing apparatus 520, and receives the partially carbonized coal briquette from the apparatus 530 for manufacturing a partially carbonized coal briquette to manufacture the molten iron.

### Experimental Example 1

The fluidity of the coal was adjusted to 1.2 log ddpm and the total dilatation was adjusted to 35 % by adding 1 % of a coking property controlling agent to the coal. The coal briquette was manufactured by the mixed coal.

The coal briquette manufactured as described above was partially carbonized in the carbonization furnace. The hot strength of the partially carbonized coal briquette was represented to be 90 % or more. The hot strength represents a weight ratio of matters having a particle diameter of 16mm or more after 500g of the sample coal briquette was rapidly heated to 950°C and rotated for 30 min.

Further, even though the coal briquettes came into contact with each other in the carbonization furnace, a phenomenon of coal briquettes being bonded or attached to each other did not occur. That is, the coal briquette charged at the upper portion smoothly descended to the lower portion to be exhausted.

### Experimental Example 2

The experiment was performed by the same method as Experimental Example 1, except that the fluidity of the coal was adjusted to 1.90 log ddpm and the total dilatation was adjusted to 60 % by using 0.5 % of the coking property controlling agent.

As a result of the experiment, the hot strength of the coal briquette was represented to be 90 % or more, and the phenomenon of coal briquettes being bonded or attached to each other did not occur.

### Experimental Example 3

Three kinds of coals described in the following Table 1 were mixed, and the coking property controlling agent was not added. The fluidity was adjusted to 1.90 log ddpm, and the total dilatation was adjusted to 59 % by adjusting a mixing ratio of each coal.

As a result of the experiment, the phenomenon of coal briquettes being bonded or attached to each other did not occur.

**(Table 1)**

| Kind of coal | Fluidity (log ddpm) | Total dilatation (%) | Ratio (%) |
|---|---|---|---|
| A | 2.32 | 70 | 75 |
| B | 1.10 | 40 | 15 |
| C | 0.0 | 0 | 10 |

### Comparative Example 1

The experiment was performed by the same method as Experimental Example 1, except that the fluidity of the coal was adjusted to 2.20 log ddpm and the total dilatation was adjusted to 70% by adding 0.2% of the coking property controlling agent.

As a result of the experiment, the hot strength was represented to be 90% or more, but the phenomenon of coal briquettes being bonded or attached to each other occurred.

### Comparative Example 2

The experiment was performed by the same method as Experimental Example 1, except that the fluidity of the coal was adjusted to 2.53 log ddpm and the total dilatation was adjusted to 92% without addition of the coking property controlling agent.

As a result of the experiment, the hot strength was represented to be 90% or more. However, the phenomenon of coal briquettes being bonded or attached to each other occurred, and thus it was impossible to exhaust the partially carbonized coal briquette.

The aforementioned Experimental Examples and Comparative Examples are summarized and described in the following Table 2.

**(Table 2)**

| Classification | Experimental Example 1 | Experimental Example 2 | Experimental Example 3 | Comparative Example 1 | Comparative Example 2 |
|---|---|---|---|---|---|
| Addition amount of the coking property controlling agent (%) | 1.0 | 0.5 | 0 | 0.2 | 0 |
| Fluidity (log ddpm) | 1.20 | 1.90 | 1.90 | 2.20 | 2.53 |
| Total dilatation (%) | 35 | 60 | 59 | 70 | 92 |
| Carbide strength (hot strength, %) | 90 or more | 90 or more | 90 or more | 90 or more | 90 or more |
| Attachment phenomenon between coal briquette particles | No occurrence | No occurrence | No occurrence | Occurrence | Occurrence |

As another example, component contents and qualities of the coal briquettes before and after partial carbonization are described in the following Table 3. In Table 3, IM means inherent moisture, VM means a volatile matter, FC means fixed carbon, and Ash means an ash.

**(Table 3)**

| Classification | Component content (%) | | | | Quality | |
|---|---|---|---|---|---|---|
| | IM | VM | FC | Ash | Hot strength (HTS16, %) | Hot strength (HTS10, %) |
| Coal briquette | 0.61 | 24.55 | 60.72 | 14.73 | 74.2 | 87.7 |
| Partially carbonized coal briquette | 1.06 | 11.63 | 70.91 | 17.46 | 93.5 | 93.5 |

As described in Table 3, the hot strength of 90% or more can be obtained by partially carbonizing the coal briquette.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A method of manufacturing molten iron, comprising:
manufacturing a coal briquette in a coal briquette manufacturing device;
providing hot gas to the coal briquette and partially carbonizing the coal briquette;
charging the coal briquette into a melter-gasifier which is connected to the coal briquette manufacturing device; and melting reduced iron charged into the melter-gasifier by the coal briquette and manufacturing molten iron,
**characterized in that**
in the partially carbonizing of the coal briquette, a carbonization initiation temperature is 600°C to 650°C, and a carbonization termination temperature is 700°C or more, the method further comprising providing raw coals for manufacturing the coal briquette before manufacturing the coal briquette; and wherein fluidity of the raw coal is in a range of 1.2 log ddpm to 1.9 log ddpm, wherein total dilatation of the raw coal is maintained at 60 % or less.

2. The method of manufacturing molten iron of claim 1, wherein the hot gas is supplied from the melter-gasifier in the partially carbonizing of the coal briquette.

3. The method of manufacturing molten iron of claim 1, further comprising a reduction furnace that is connected to the melter-gasifier and provides the reduced irons and wherein the hot gas is supplied from the reduction furnace in the partially carbonizing of the coal briquette.

## Patentansprüche

1. Verfahren zum Herstellen von schmelzflüssigem Eisen, umfassend:
Herstellen eines Kohlebriketts in einer Kohlebrikettherstellungsvorrichtung;
Bereitstellen von heißem Gas an das Kohlebrikett und teilweises Karbonisieren des Kohlebriketts;
Einbringen des Kohlebriketts in einen Schmelzvergaser, der an die Kohlebrikettherstellungsvorrichtung angeschlossen ist; und Schmelzen von in den Schmelzvergaser eingebrachtem reduziertem Eisen durch das Kohlebrikett und Herstellen von schmelzflüssigem Eisen,
**dadurch gekennzeichnet, dass**
beim teilweisen Karbonisieren des Kohlebriketts eine Karbonisierungsbeginntemperatur 600° C bis 650° C beträgt und eine Karbonisierungsendtemperatur 700° C oder mehr beträgt,
wobei das Verfahren darüber hinaus umfasst, Rohkohlen zum Herstellen des Kohlebriketts vor dem Herstellen des Kohlebriketts bereitzustellen; und wobei eine Fluidität der Rohkohle in einem Bereich von 1,2 log ddpm bis 1,9 log ddpm liegt, wobei eine Gesamtausdehnung der Rohkohle auf 60 % oder weniger gehalten wird.

2. Verfahren zum Herstellen von schmelzflüssigem Eisen nach Anspruch 1, wobei das heiße Gas aus dem Schmelzvergaser beim teilweisen Karbonisieren des Kohlebriketts zugeführt wird.

3. Verfahren zum Herstellen von schmelzflüssigem Eisen nach Anspruch 1, darüber hinaus einen Reduktionsofen umfassend, der an den Schmelzvergaser angeschlossen ist und das reduzierte Eisen bereitstellt, und wobei das heiße Gas aus dem Reduktionsofen beim teilweisen Karbonisieren des Kohlebriketts zugeführt wird.

## Revendications

1. Procédé de fabrication de fer fondu, comprenant :
la fabrication d'une briquette de charbon dans un dispositif de fabrication de briquette de charbon ;
la fourniture de gaz chaud à la briquette de charbon et la carbonisation partielle de la briquette de charbon ;
le chargement de la briquette de charbon dans une installation de fusion-gazéification qui est raccordée au dispositif de fabrication de briquette de charbon ; et la fusion de fer réduit chargé dans l'installation de fusion-gazéification par la briquette de charbon et la fabrication de fer fondu,
**caractérisé en ce que**
lors de la carbonisation partielle de la briquette de charbon, une température de début de carbonisation est de 600 °C à 650 °C, et une température de fin de carbonisation est de 700 °C ou plus,
le procédé comprenant en outre la fourniture de charbons bruts pour la fabrication de la briquette de charbon avant la fabrication de la briquette de charbon ; et sachant que la fluidité du charbon brut est comprise dans une plage de 1,2 log ddpm à 1,9 log ddpm, sachant que la dilatation totale du charbon brut est maintenue à 60 % ou moins.

2. Le procédé de fabrication de fer fondu de la revendication 1, sachant que le gaz chaud est fourni depuis l'installation de fusion-gazéification lors de la carbonisation partielle de la briquette de charbon.

3. Le procédé de fabrication de fer fondu de la revendication 1, comprenant en outre un four de réduction qui est raccordé à l'installation de fusion-gazéification et fournit les fers réduits et sachant que le gaz chaud est fourni depuis le four de réduction lors de la carbonisation partielle de la briquette de charbon.
